# DEMANDE DE BREVET EUROPEEN

(11) **EP 1 333 221 A2**
(43) Date de publication de la demande: **06.08.2003**
(21) Numéro de dépôt: 03290266.0
(22) Date de dépôt: 04.02.2003
(51) Int. Cl.: F16L 55/38

(54) **Procédé d'inspection de canalisation de chauffage urbain**

(30) Priorité: 05.02.2002 FR 0201350
(71) Demandeur: Cegelec, 92508 Rueil-Malmaison (FR)
(72) Inventeur: Tasca, Jean-Pierre, 91700 Sainte Genevieve des Bois (FR)
(74) Mandataire: Gosse, Michel

(57) **Abrégé**

Le procédé d'inspection de canalisation (3) de chauffage urbain consiste à :
- introduire un véhicule (1) dans la canalisation (3), ledit véhicule (1) comprenant un parachute (11) un ballon (12) dégonflé et une poulie (13) dans laquelle est engagé un câble (6) ;
- propulser le véhicule (1) dans ladite canalisation (3) en introduisant un fluide sous pression qui agit sur le parachute (11) ;
- immobiliser le véhicule (1) dans la canalisation (3) en gonflant ledit ballon (12) ;
- déplacer un capteur (7) dans la canalisation en le fixant à une extrémité dudit câble (6) et en tirant sur l'autre extrémité du câble (6) pour rapprocher le capteur (7) dudit véhicule immobilisé (1) en vue de réaliser l'inspection de la canalisation (3).
Avec ce procédé l'inspection peut être réalisée en accédant à une seule extrémité de la canalisation.

## Description

L'invention concerne un procédé d'inspection de canalisation de chauffage urbain, notamment en vue de détecter des défauts situés par exemple sur les surfaces interne et externe ou dans l'épaisseur de cette canalisation. Les défauts à relever peuvent être par exemple des zones présentant une corrosion importante ou bien des fissures. Une telle inspection nécessite un arrêt d'exploitation pour introduire un capteur et le déplacer dans la canalisation à inspecter qui est souvent souterraine. Le capteur -ou sonde- est généralement un capteur à courants de Foucault ou bien une caméra, en permanence relié à l'extérieur de la canalisation par un câble de transmission de données pour l'acquisition et/ou l'enregistrement des informations relatives à l'inspection. Un opérateur situé en surface peut ainsi contrôler l'état de la canalisation au fur et à mesure que le capteur avance. L'invention pourra également être adaptée à d'autres méthodes d'inspection de canalisation.

Il existe une pluralité de techniques utilisées actuellement pour déplacer le capteur dans la canalisation. L'une de ces techniques consiste à embarquer le capteur sur un support et à le propulser par injection d'air comprimé dans la canalisation. Cette technique nécessite un débit d'air comprimé considérable car le diamètre externe du support est sensiblement inférieur au diamètre interne de la canalisation. Cette différence de diamètres est indispensable pour s'adapter aux variations du diamètre interne de la canalisation. Le passage du capteur dans des coudes ou dans des piquages de la canalisation reste néanmoins relativement difficile et peut bloquer le capteur ce qui nécessite d'ouvrir la canalisation pour l'en extraire.

Une autre technique consiste à embarquer le capteur dans un véhicule motorisé, encore connu sous le nom de "crawler", qui est introduit dans la canalisation et qui se déplace le long de celle-ci. Un tel véhicule doit emporter une charge importante puisqu'il comporte des éléments de motorisation. En outre, le véhicule doit être capable de s'adapter dynamiquement aux variations de diamètre de la canalisation afin de maintenir le capteur qu'il transporte sensiblement centré par rapport à celle-ci. D'une façon générale, un tel véhicule motorisé a un coût de développement et de fabrication élevés, il nécessite une maintenance complexe alors que sa durée de vie et sa fiabilité ne sont pas satisfaisantes.

Le but de l'invention est de remédier à ces inconvénients en proposant un procédé pour déplacer un capteur dans une canalisation sans risque de blocage et pour un coût compétitif.

A cet effet, l'invention a pour objet un procédé d'inspection de canalisation de chauffage urbain avec un capteur, caractérisé en ce qu'il consiste à :
- introduire un véhicule dans la canalisation, ledit véhicule comprenant un parachute un ballon dégonflé et une poulie dans laquelle est engagé un câble ;
- propulser le véhicule dans ladite canalisation en introduisant un fluide sous pression qui agit sur le parachute ;
- immobiliser le véhicule dans la canalisation en gonflant ledit ballon ;
- déplacer ledit capteur dans la canalisation en le fixant à une extrémité dudit câble et en tirant sur l'autre extrémité du câble pour rapprocher le capteur du véhicule immobilisé en vue de réaliser l'inspection de la canalisation.

Avec ce procédé l'inspection peut être réalisée en accédant à une seule extrémité de la canalisation. De plus, la masse du véhicule qui est déplacé par le fluide sous pression est très faible de sorte que les risques de blocage dans la canalisation sont réduits. Le parachute qui est souple et s'adapte en permanence au diamètre de la canalisation améliore le rendement pour la propulsion par fluide pressurisé. Avantageusement, le ballon est dégonflé lorsque le capteur rejoint le véhicule qui est immobilisé dans la canalisation, le véhicule et le capteur sont ensuite ramenés hors de la canalisation par traction sur l'extrémité du câble, et l'inspection est réalisée durant le retour du véhicule et du capteur. Les extrémités du câble pourront être maintenues hors de la canalisation durant la propulsion du véhicule de manière à gonfler le ballon pour immobiliser le véhicule sur tension du câble. De cette manière, l'inspection est réalisée pendant le retour du capteur pour mieux maîtriser sa vitesse de déplacement, et la longueur de canalisation inspectée correspond à une longueur libre de câble qui est introduite avec le véhicule avant pressurisation de la canalisation.

L'invention concerne également un véhicule pour la mise en oeuvre du procédé d'inspection. Ce véhicule comprend un parachute destiné à être déplacé dans la canalisation par un fluide sous pression, un ballon gonflable fixé au parachute et destiné à être gonflé pour immobiliser le véhicule dans la canalisation, et une poulie fixée au ballon gonflable et destinée à recevoir un câble auquel est fixé le capteur en vue de le déplacer par traction du câble lorsque le véhicule est immobilisé dans la canalisation. Ce véhicule forme un ensemble compact de faible masse constitué d'éléments simples de sorte qu'il peut être réalisé à faible coût.

Avantageusement, le véhicule comprend également une cartouche de gaz sous pression avec un déclencheur agencé pour gonfler le ballon lorsque le câble est tendu, et une valve de dégonflage du ballon incluant un déclencheur mécanique. De cette manière, le véhicule s'immobilise de lui même pour former un ancrage dès qu'il a parcouru un course prédéterminée dans la canalisation.

L'invention sera maintenant décrite plus en détail, et en référence aux dessins annexés qui en illustrent une forme de réalisation à titre d'exemple non limitatif.
La figure 1 est une représentation schématique du procédé selon l'invention en phase de propulsion du véhicule dans une canalisation formant une lyre ;
La figure 2 est une représentation schématique du procédé lorsque le câble est tendu avant immobilisation du véhicule ;
La figure 3 est une représentation schématique du procédé lorsque le câble est tendu et le véhicule immobilisé dans la canalisation ;
La figure 4 est une représentation schématique du procédé lors de l'introduction du capteur dans l'ouverture de la canalisation ;
La figure 5 est une représentation schématique du procédé lorsque le capteur est déplacé dans la canalisation ;
La figure 6 est une autre représentation schématique du procédé lorsque le capteur est déplacé dans la canalisation ;
La figure 7 est une représentation du procédé dans laquelle le capteur a rejoint le véhicule et dans laquelle le ballon est dégonflé ;
La figure 8 est une représentation schématique du procédé durant le retour du capteur et du véhicule vers l'ouverture de la canalisation ;
La figure 9 est une représentation schématique du véhicule selon l'invention lorsqu'il est propulsé par un fluide sous pression ;
La figure 10 est une représentation schématique du véhicule selon l'invention avec son ballon gonflé pour être immobilisé dans la canalisation ;
La figure 11 est une représentation schématique du véhicule selon l'invention avec son ballon dégonflé lorsqu'il est ramené vers l'ouverture de la canalisation.

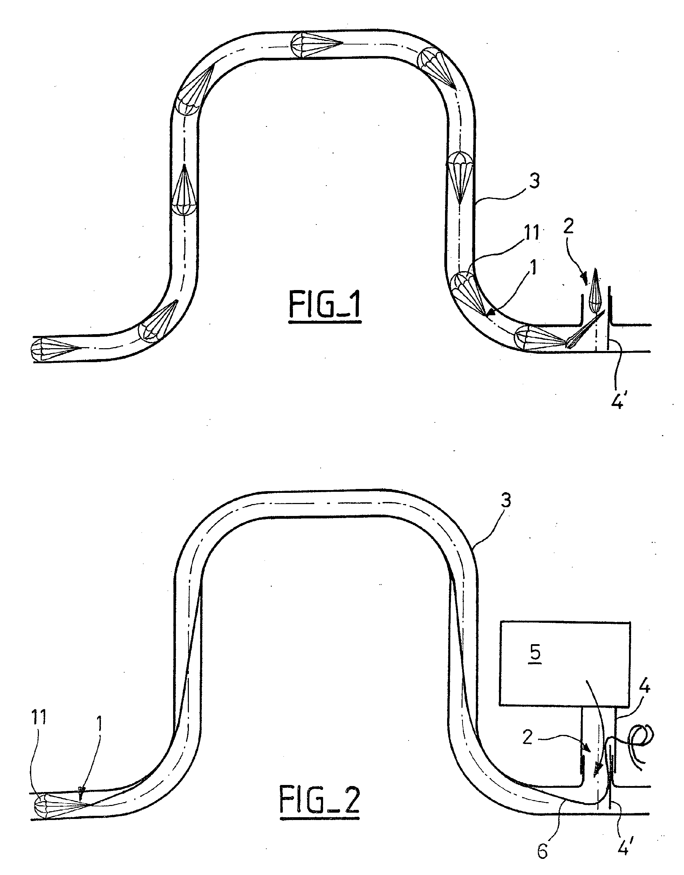

Le procédé selon l'invention est notamment destiné à l'inspection de l'état d'une canalisation avec un véhicule 1 introduit par une ouverture 2 d'une canalisation de chauffage urbain 3. Cette canalisation pourra être par exemple celle qui est représentée schématiquement dans les figures 1 à 8, qui est une lyre de dilatation thermique comprenant quatre coudes à quatre-vingt dix degrés chacun, formant sensiblement un « U ».

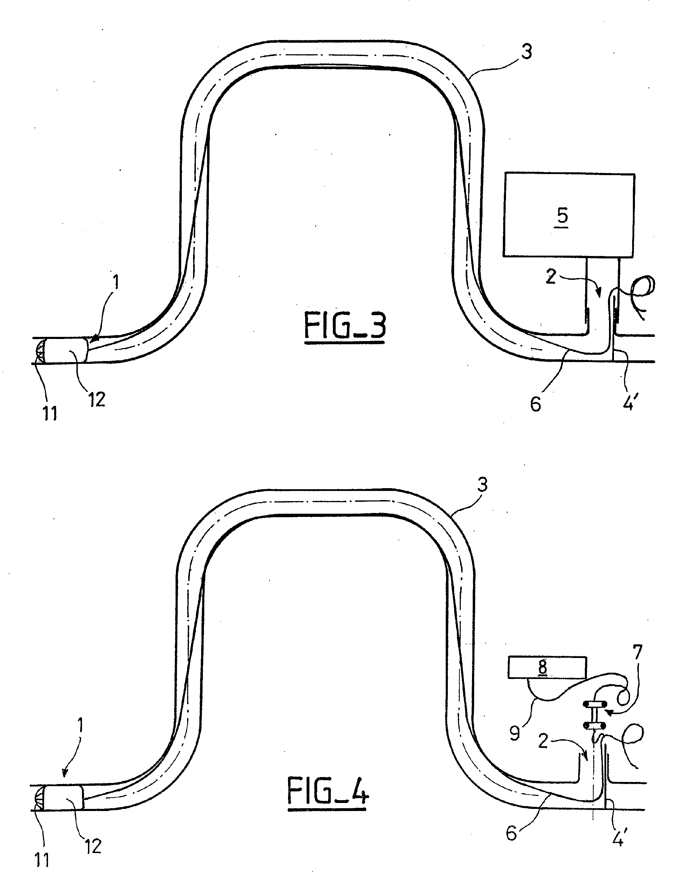

Selon l'invention, un véhicule 1 est introduit par une ouverture 2 de la canalisation 3 pour être propulsé par mise sous pression d'un fluide afin de parcourir une distance prédéterminée dans la canalisation à inspecter, comme représenté dans les figures 1 et 2. Ce véhicule est ensuite immobilisé dans la canalisation 3 pour former un point d'ancrage représenté figure 3 en vue de tracter le capteur jusqu'à ce qu'il rejoigne le véhicule immobilisé, comme visible dans les figures 4 à 7. L'inspection de la canalisation pourra être réalisée lorsque le capteur rejoint le véhicule immobilisé ou bien durant le retour du capteur et du véhicule hors de la canalisation. Dans un cas comme dans l'autre, ce procédé permet l'inspection de la canalisation en accédant à celle-ci par une seule de ses extrémités.

Le véhicule qui est introduit comprend un parachute 11 fixé à un ballon 12 qui est dégonflé lors de son introduction dans l'ouverture 2. Après introduction du véhicule, une bride de raccordement 4 ou une gaine est montée entre l'ouverture 2 et un compresseur 5 de manière à mettre sous pression la canalisation pour propulser le véhicule 1 au moyen de son parachute 11. Le compresseur 5 pourra par exemple être un compresseur à air ayant une puissance suffisante pour produire un flux d'air sous pression dans la canalisation. Dans cet exemple, l'ouverture 2 est un piquage dans la canalisation 3, mais le procédé s'applique aussi bien à d'autres types d'ouvertures comme par exemple une ouverture formant une section droite et résultant d'une découpe de la canalisation à inspecter. Comme visible dans les figures 2 et 3, un volet 4' est monté dans le piquage du côté de la partie de canalisation non inspectée. Ce volet 4' est destiné à éviter que la partie non inspectée de la canalisation ne soit pressurisée par le compresseur lors de la propulsion du parachute.

Le ballon 12 est relié à l'ouverture de la canalisation ou à la bride 4 par un câble 6 dont une certaine longueur libre a été introduite dans la canalisation avec le véhicule 1. La course du véhicule est ainsi limitée à la longueur libre du câble 6. Ce câble sera par exemple un câble en acier entouré par une gaine en téflon (d'autres matériaux comme le kevlar ou d'autres configurations pourront être aussi utilisés) de manière à réduire les efforts de frottement dus au glissement du câble le long de la canalisation. Plus particulièrement, le câble 6 est engagé dans une poulie fixée au ballon 12 de telle sorte que deux brins de ce câble 6 se trouvent dans la canalisation durant la propulsion du véhicule 1, et deux extrémités de ce câble sont maintenues hors de la canalisation. Avantageusement, la longueur libre de câble sera lovée en étant embarquée par le véhicule 1. Comme visible dans les figures 2 et 3, la bride 4 est agencée pour maintenir les extrémités du câble 6 hors de la zone pressurisée de la canalisation 3 tout en bloquant ces extrémités en déplacement. L'utilisation d'un parachute principalement constitué d'une voilure forme un véhicule capable à la fois de s'adapter en permanence aux variations de diamètre et de passer dans les différents coudes de la lyre sans risque de blocage.

Selon l'invention le véhicule est immobilisé dans la canalisation par gonflage du ballon. Le ballon pourra par exemple être gonflé lorsque le câble 6 est tendu entre le ballon 12 et la bride 4. La canalisation 3 est alors dépressurisée et le ballon 12 gonflé pour immobiliser le véhicule 1 dans sa position de fin de course de telle sorte qu'il forme un point d'ancrage pour tracter ensuite un capteur. Après dépressurisation, la bride 4 est retirée pour introduire un capteur 7 par l'ouverture 2. Ce capteur est introduit en étant fixé à la première extrémité du câble 6, comme représenté schématiquement figure 4. Dans l'exemple d'une inspection par Courants de Foucault, le capteur a la forme générale d'une bobine, avec un corps sensiblement cylindrique et de faible diamètre ayant à chacune de ses extrémités une couronne disposée coaxialement, d'un diamètre légèrement inférieur au diamètre interne de la canalisation. Le capteur 7 a ainsi un diamètre élevé à chacune de ses extrémités et un faible diamètre entre ses extrémités, ce qui facilite son passage dans des coudes de la canalisation. Chaque couronne pourra être garnie d'une brosse périphérique destinée à maintenir le capteur sensiblement centré par rapport à la canalisation malgré ses variations de diamètre. Avantageusement, le corps comprend un passage de câble et un point d'accrochage pour que le câble 6 traverse le capteur tout en étant libre de coulisser par rapport à celui-ci. Grâce à ce passage de câble, les frottements du câble contre la canalisation sont encore réduits en vue de faciliter la progression du capteur dans la canalisation lorsqu'il est rapproché du véhicule immobilisé.

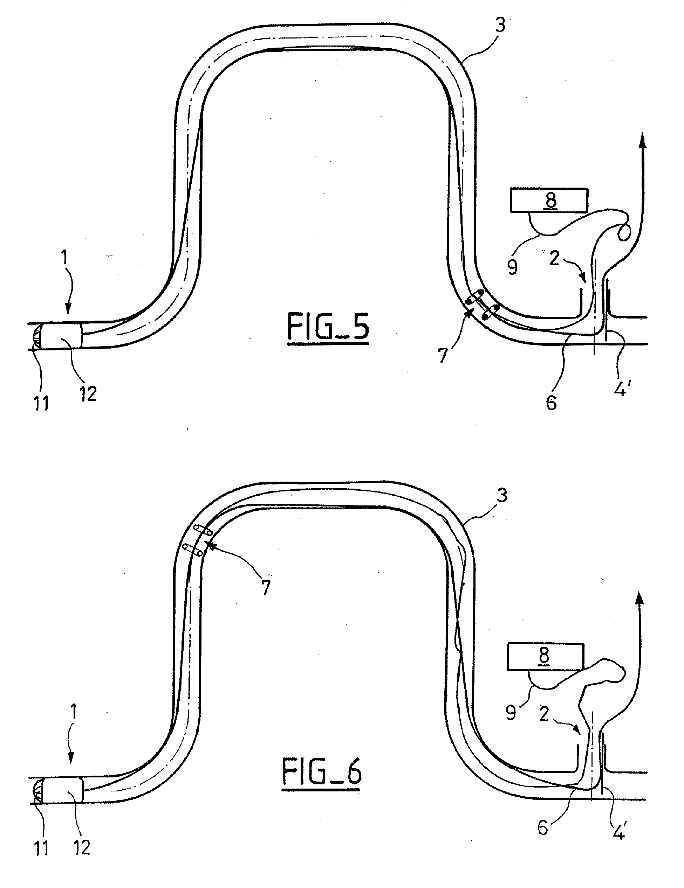

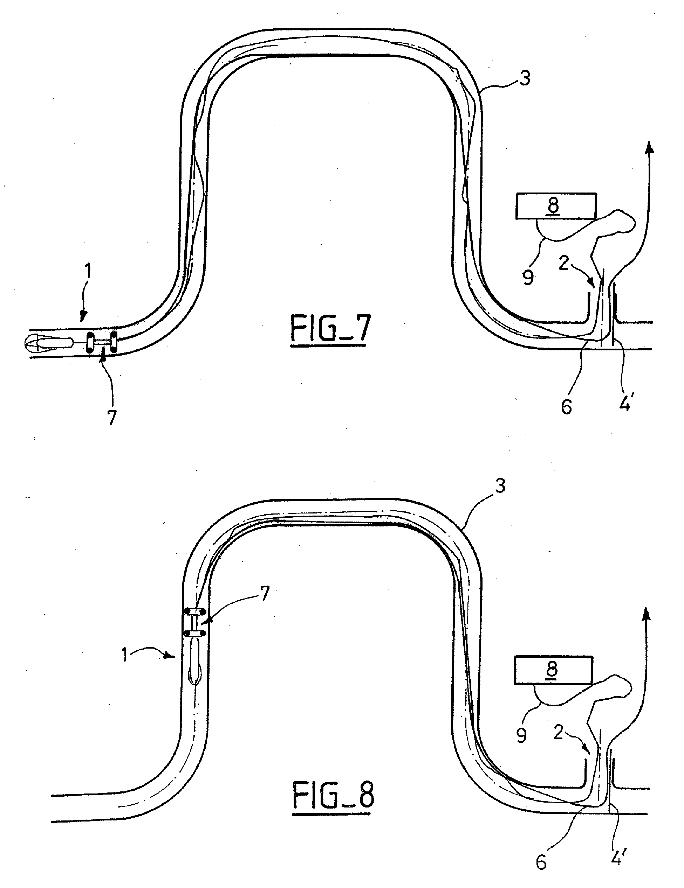

Par traction de la seconde extrémité du câble 6, le capteur 7 est alors déplacé jusqu'à atteindre le véhicule 1 qui est immobilisé à l'intérieur de la canalisation 3 comme représenté schématiquement dans les figures 5 et 6. Dès que le capteur atteint le véhicule 1, Le ballon 11 est dégonflé pour débloquer le véhicule 1 dans une étape correspondant à la figure 7. Après déblocage du véhicule, l'ensemble véhicule et capteur est ramené vers l'ouverture de la canalisation par traction sur la seconde extrémité du câble 6, comme représenté dans la figure 8. L'inspection de la canalisation par le capteur pourra avantageusement être réalisée sur ce trajet de retour. En effet, durant le retour du capteur et du véhicule, les frottements du câble 6 sur la canalisation 3 sont réduits puisqu'un seul brin du câble 6 est présent dans la canalisation. La vitesse de déplacement peut ainsi être mieux régulée pour être sensiblement constante en vue d'optimiser les conditions de fonctionnement du capteur. Durant le retour du capteur, les données d'inspection sont transmises vers un système d'analyse et/ou d'enregistrement 8 à travers un câble de transmission de données 9 reliant le capteur au système d'analyse. Comme visible dans les figures 4 à 7, le câble de transmission de données 9 aura été introduit dans la canalisation avec le capteur.

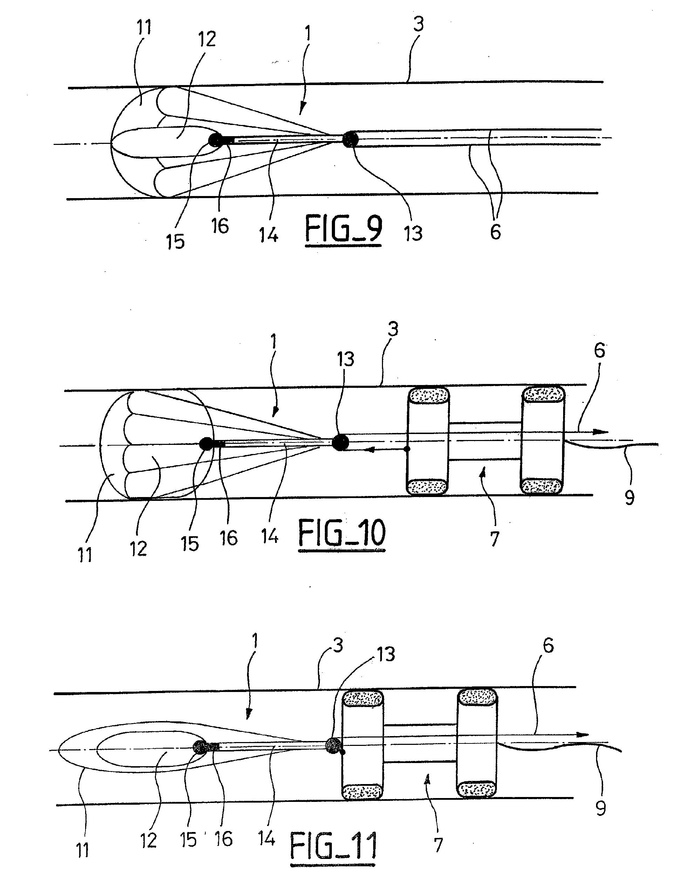

L'invention concerne également un véhicule destiné à la mise en oeuvre de ce procédé d'inspection. Selon l'invention le véhicule 1 comprend un parachute 11 auquel est fixé le ballon gonflable 12, et une poulie 13 qui est fixée au ballon gonflable 11, comme visible figure 9. Le parachute pourra comprendre une voilure ayant un diamètre externe sensiblement supérieur au diamètre nominal de la canalisation. Avantageusement, cette voilure sera montée sur une structure souple telle qu'une pluralité de lames souples ou baleines destinées à maintenir le pourtour de la voilure en appui contre la surface interne de la canalisation 3. Cette structure sera par exemple agencée comme les baleines d'un parapluie, ou encore comme un cerceau fixé à la périphérie de la voilure.

Plus particulièrement, l'utilisation d'une telle structure qui tend à former une étanchéité maximale entre le parachute et la canalisation permet d'améliorer le rendement de propulsion pour réduire la consommation d'air, de manière à réduire le dimensionnement du compresseur 5. Avantageusement, le pourtour de cette voilure pourra comprendre un joint néoprène périphérique pour optimiser les frottements avec la canalisation. La charge utile du ballon et du parachute sera dimensionnée de manière à être la plus faible possible afin d'améliorer le rendement de la propulsion par flux d'air. Cette structure pourra être conçue repliable pour refermer le parachute lorsque le ballon est dégonflé en vue de restreindre la résistance opposée au déplacement du véhicule lors du retour de l'ensemble véhicule et capteur vers l'ouverture de la canalisation.

Avantageusement, le ballon gonflable est positionné à l'intérieur de la cloche que forme le parachute 11 de manière à constituer un ensemble compact. Dans l'exemple représenté figure 9, le ballon qui est dégonflé forme sensiblement un cylindre ayant une extrémité fixée au centre de la cloche formée par le parachute 11 et son autre extrémité solidaire d'un bras 14. Ce ballon sera dimensionné pour avoir un diamètre -lorsqu'il est gonflé- supérieur à la section de la canalisation, de manière à garantir un blocage satisfaisant du véhicule dans la canalisation, comme représenté schématiquement dans la figure 10. A titre d'exemple, ce ballon 11 sera dimensionné pour maintenir le véhicule bloqué dans la canalisation sans glissement en s'opposant à un effort de traction dans le bras 14 valant au moins deux fois l'effort de traction maximal nécessaire de traction nécessaire pour tracter le capteur 7.

Lorsque l'ensemble du véhicule est dans une canalisation 3, le bras 14 s'étend parallèlement à la canalisation en ayant la poulie 13 fixée à son extrémité libre. Comme représenté schématiquement dans les figures 9 à 11, le ballon comprend une cartouche 15 sous pression qui est destinée à gonfler le ballon lorsque le véhicule arrive en fin de course dans la canalisation, c'est à dire lorsque le câble 6 se tend. Le gonflage du ballon 11 pourra par exemple être commandé à distance à travers une liaison radio ou bien un câble électrique reliant le véhicule à l'extérieur de la canalisation.

Dans un mode de réalisation préféré, la cartouche de gonflage 15 est reliée à un déclencheur 16 qui est ici monté entre le bras 14 et le ballon 11.

Ce déclencheur pourra par exemple être actionné par tension d'un câble de déclenchement annexe dédier au gonflage du ballon. Dans l'exemple représenté dans les figures, c'est le câble 6 destiné à la traction du capteur 7 qui permet de déclencher le gonflage du ballon. Plus particulièrement ce déclencheur 16 provoque l'ouverture de la cartouche de gaz lorsque l'effort appliqué au bras 14 est supérieur à une valeur seuil correspondant à un état tendu du câble 6. Avec cet agencement, le véhicule s'immobilise automatiquement lorsqu'il arrive en fin de course, de sorte qu'il n'est pas nécessaire de prévoir un dispositif de commande avec un déclenchement par un opérateur. Le déclencheur 16 pourra par exemple être une membrane qui se rompt pour ouvrir la cartouche de gaz lorsqu'elle est soumise à un effort supérieur à une valeur seuil. D'autres types de déclencheurs 16 pourront être envisagés comme par exemple un dispositif à jauge de contraintes ou encore un accéléromètre pour déclencher son ouverture, sans sortir du cadre de l'invention.

Le dégonflage du ballon qui est réalisé lorsque le capteur 7 rejoint le véhicule dans la canalisation 3, comme représenté figure 11, pourra par exemple être déclenché sur franchissement d'une autre valeur seuil de l'effort appliqué au bras 14. Cette autre valeur seuil sera alors choisie supérieure au seuil de gonflage, de manière à correspondre à une traction élevée sur le câble 6 lorsque le capteur 7 entre en contact avec la poulie 13 alors que le véhicule 1 est encore immobilisé dans la canalisation.

Dans un mode de réalisation préféré du véhicule selon l'invention, le ballon comprend un valve de dégonflage avec un actionneur mécanique (non représenté) situé à proximité de la poulie 13 de telle sorte que l'entrée en contact du capteur 7 avec cet actionneur produit le dégonflage du ballon 11 par ouverture de cette valve.

Un système de sécurité temporisé peut être aussi associé au système de dégonflage du ballon. Une minuterie programmable assure le dégonflage automatique si les commandes normales n'ont pu l'actionner. La minuterie est ajustée en fonction de temps normaux pour l'ensemble du procédé d'inspection.

## Revendications

1. Procédé d'inspection de canalisation (3) de chauffage urbain avec un capteur (7), consistant à :
- introduire un véhicule (1) dans la canalisation (3), ledit véhicule (1) comprenant un ballon (12) dégonflé et une poulie (13) dans laquelle est engagé un câble (6) ;
- immobiliser le véhicule (1) dans la canalisation (3) en gonflant ledit ballon (12) ;
- déplacer ledit capteur (7) dans la canalisation en le fixant à une extrémité dudit câble (6) et en tirant sur l'autre extrémité du câble (6) pour rapprocher le capteur (7) dudit véhicule immobilisé (1) en vue de réaliser l'inspection de la canalisation (3) ;
**caractérisé en ce que** le véhicule (1) comprend un parachute (11), **en ce que** le véhicule (1) est propulsé dans la canalisation (3) par un fluide introduit sous pression dans la canalisation (3) qui agit sur le parachute, **en ce que** le ballon (12) se dégonfle lorsque le capteur (7) rejoint le véhicule (3) immobilisé dans la canalisation, et **en ce que** le véhicule (1) et le capteur (7) sont ramenés hors de la canalisation (3) par traction sur l'extrémité du câble (6) de sorte que l'inspection est réalisée durant le retour du véhicule (1) et du capteur (7).

2. Procédé d'inspection selon l'une des revendications 1, dans lequel lesdites extrémités du câble (6) sont maintenues hors de la canalisation durant la propulsion du véhicule (1), et dans lequel le ballon (12) est gonflé pour immobiliser le véhicule (1) sur tension du câble (6).

3. Véhicule pour l'inspection d'une canalisation de chauffage urbain (3) avec un capteur (7), **caractérisé en ce qu'**il comprend un parachute destiné à être déplacé dans ladite canalisation (3) par un fluide sous pression, un ballon gonflable (12) destiné à être gonflé pour immobiliser ledit véhicule (1) dans ladite canalisation (3), et une poulie (13) destinée à recevoir un câble (6) auquel est fixé ledit capteur (7) en vue de déplacer ledit capteur (7) dans la canalisation (3) par traction sur ledit câble (6) lorsque ledit véhicule (1) est immobilisé dans la canalisation (3), et une valve de dégonflage du ballon (12) incluant un actionneur mécanique qui déclenche le dégonflage du ballon lorsque le capteur (7) entre en contact le véhicule (1).

4. Véhicule selon la revendication 3, comprenant une cartouche (15) de gaz sous pression reliée au ballon (12) et un déclencheur (16) agencé pour être actionné par tension d'un câble.

5. Le véhicule selon la revendication 4, dans lequel le câble actionnant le déclencheur (16) est le câble (6) qui est engagé dans la poulie (13).

6. Véhicule selon l'une des revendications 3 à 5, dans lequel ledit parachute (11) comprend une voilure montée sur une structure souple destinée à maintenir le pourtour de ladite voilure en appui contre la surface interne de la canalisation (3).

7. Véhicule selon la revendication 6, dans lequel la structure souple est repliable.
